Europäisches Patentamt

European Patent Office

Office européen des brevets

(19)

(11) **EP 0 525 769 B1**

(12) **EUROPEAN PATENT SPECIFICATION**

(45) Date of publication and mention
of the grant of the patent:
**29.09.1999 Bulletin 1999/39**

(51) Int Cl.6: **C08G 65/32**, C09D 171/00,
C08L 43/04, C09D 143/04

(21) Application number: **92113008.4**

(22) Date of filing: **30.07.1992**

(54) **The use of a curable coating composition as an undercoat for vehicles**

Verwendung einer härtbaren Beschichtungszusammensetzung als Unterbodenbeschichtung in
Fahrzeugen

Utilisation d'une composition durcissable pour le revêtement de dessous de caisse d'un véhicule

(84) Designated Contracting States:
**BE CH DE ES FR GB IT LI NL SE**

(30) Priority: **30.07.1991 JP 19030591**
**09.09.1991 JP 22919991**
**27.09.1991 JP 24977791**

(43) Date of publication of application:
**03.02.1993 Bulletin 1993/05**

(73) Proprietor: **KANEGAFUCHI KAGAKU KOGYO
KABUSHIKI KAISHA
Kita-ku, Osaka-shi, Osaka 530 (JP)**

(72) Inventors:
• **Kawamura, Jo
Akashi-shi, Hyogo (JP)**
• **Hagiwara, Kazuo
Kobe-shi, Hyogo (JP)**
• **Komitsu, Shitaro
Takasago-shi, Hyogo (JP)**
• **Iwakiri, Hiroshi
Takasago-shi, Hyogo (JP)**
• **Fujita, Masayuki
Takasago-shi, Hyogo (JP)**
• **Hasegawa, Takashi
Kakogawa-shi, Hyogo (JP)**

(74) Representative: **VOSSIUS & PARTNER
Postfach 86 07 67
81634 München (DE)**

(56) References cited:
**EP-A- 0 108 946**     **EP-A- 0 339 666**
**EP-A- 0 419 669**     **EP-A- 0 476 150**

**Description**

The present invention relates to the use of a curable coating composition as an undercoat or a sealer of a vehicle body which is capable of spray coating.

Floor panels or side panels of automobiles are usually coated with an undercoating for protection against strikes of gravel, etc. during running, rust inhibiting, vibration damping, and sound insulation. Further, various joints of interior or exterior panels of automobiles which are structurally difficult to be made rustproof are coated with a body sealer for prevention of corrosion due to penetration of water or humidity. Polyvinyl chloride sol has been used as a coating material suitable for these uses.

To meet the recent tendency to weight reduction of automobiles, there has been a demand for thickness reduction of the coating film while obtaining further increased anticorrosion and vibration damping. From the standpoint of saving of resources and energy, there has also been a keen demand for reduction of baking temperature or omission of a baking step.

Although polyvinyl chloride sol is cheap and has satisfactory physical properties to some extent, it makes but little progress in gelation when baked at a low temperature, resulting in a failure of obtaining sufficient anticorrosion or resistance to chipping (resistance to damage). Besides, the vibration damping of the vinyl chloride coating, which is basically not so high, would be lessened with a reduction of the thickness.

EP-A-0 476 150 describes a curable resin composition comprising (A) a specifically defined oxypropylene and (B) an epoxy resin. It is said that the composition may be suitably used as an adhesive, a foaming material, a binder or a composite material. EP-A-0 339 666 discloses a curable polymer composition comprising (A) a specifically defined copolymer comprising alkyl acrylates and (B) a specific oxyalkylene based polymer having at least one silicon-containing group. Moreover, it is disclosed that said curable polymer composition can be used as an adhesive, a coating, a waterproofing material, a sealing agent, a templating material, a castable rubber material or a foaming material. The curing composition of EP-A-0 108 946 comprises (A) a specific polyether and (B) a polymer obtained by polymerizing a polymerizable monomer. Said curing composition might be used as a paint, an adhesive, a modifier, a foam material, a waterproofing material, a spraying material or a rubber material. Moreover, it is said that the composition may be coated onto substrates such as resins, papers, all kinds of cloths, metal foils, metallized plastic films and asbestos or glass fiber cloths. EP-A- 0 419 669 relates to a thermosetting composition comprising (A) a resin having a hydroxyl group, (B) a hydrolyzable silyl group-containing polymer, (C) a hydrolyzable silicon compound and (D) a curing catalyst. Said composition might be used for various coatings for outer walls of buildings, automobiles, industrial machines, steel furniture, household electric appliances and plastics.

An object of the present invention is to provide a coating composition to be used as an undercoat for vehicles or a sprayable coating composition which can be firmly cured under a low baking temperature condition to provide a coating film having a reduced thickness while exhibiting excellent anticorrosion, resistance to chipping, and vibration damping.

This object is achieved by the use of a coating composition comprising an oxyalkylene polymer having a silicon-containing group which has a hydroxyl group or a hydrolyzable group bonded to the silicon atom and is capable of crosslinking on forming a siloxane bond (hereinafter referred to as a reactive silicon group).

Oxyalkylene polymers having the above-described reactive silicon group are known substances disclosed, e.g., in JP-B-45-36319, JP-B-46-12154, JP-B-49-32673 (the term "JP-B" as used herein means an "examined published Japanese patent application"), JP-A-50-156599, JP-A-51-73561, JP-A-54-6096, JP-A-55-82123, JP-A-55-123620, JP-A-55-125121, JP-A-55-131022, JP-A-55-135135, JP-A-55-137129 (the term "JP-A" as used herein means an "unexamined published Japanese patent application"), and U.S. Patent 3,971,751.

The oxyalkylene polymer skeleton preferably comprises a repeating unit represented by formula: $-R^1-O-$, wherein $R^1$ represents an alkylene group, and particularly an alkylene group having 3 or 4 carbon atoms. Specific examples of the alkylene group $R^1$ are $-CH(CH_3)CH_2-$, $-CH(C_2H_5)CH_2-$, $-C(CH_3)_2CH_2-$, $-CH_2CH_2CH_2CH_2-$, with $-CH(CH_3)CH_2-$ being particularly preferred. The oxyalkylene polymer skeleton may be composed solely of one kind of the repeating unit or of two or more different repeating units. The oxyalkylene polymer preferably contains at least 50% by weight, more preferably at least 70% by weight, and most preferably at least 80% by weight, of the repeating unit represented by formula $-R^1-O-$.

The reactive silicon group is a well-known functional group and typically includes a group represented by formula (I):

$$-[Si(R^2_{2-b})(X_b)-O-]_m-Si(R^2_{3-a})X_a \qquad (I)$$

wherein X or Xs, which may be the same or different, each represent a hydroxyl group or a hydrolyzable group; $R^2$ or

$R^2$s, which may be the same or different, each represent a monovalent hydrocarbon group having from 1 to 20 carbon atoms or a triorganosiloxy group $(R'_3)SiO$-, wherein three R' groups, which may be the same or different, each represent a monovalent hydrocarbon group having from 1 to 20 carbon atoms; a is 0, 1, 2, or 3, and b is 0, 1 or 2, provided that $1 \leq a + mb$; and m is 0 or an integer of from 1 to 19; b's in $-[Si(R^2_{2-b})(X_b)-O-]_m$- do not need to be the same.

From the economical standpoint, preferred of the reactive silicon groups of formula (I) are those represented by formula (II):

$$-Si(R^2_{3-n})X_n \qquad (II)$$

wherein $R^2$ is as defined above; and n is 1, 2, or 3.

Specific examples of the hydrolyzable group as represented by X in formula (I) are a halogen atom, a hydrogen atom, an alkoxy group, an acyloxy group, a ketoxime group, an amino group, an amide group, an aminooxy group, a mercapto group, and an alkenyloxy group. Among them, an alkoxy group, e.g., a methoxy group or an ethoxy group, is preferred because of its mild hydrolyzability.

The hydrocarbon group as represented by $R^2$ or $R^4$ includes an alkyl group (e.g., methyl, ethyl), a cycloalkyl group (e.g., cyclohexyl), an aryl group (e.g., phenyl), and an aralkyl group (e.g., benzyl), with a methyl group being particularly preferred.

For obtaining sufficient curing properties, the average number of the reactive silicon groups present per molecule of the oxyalkylene polymer is preferably at least 1, more preferably at least 1.1, and most preferably at least 1.5 groups. Further, the reactive silicon group is preferably bonded to the molecular chain terminal of the oxyalkylene polymer skeleton.

The oxyalkylene polymer preferably has a number average molecular weight (Mn) of from 500 to 30,000, more preferably from 3,000 to 30,000, and most preferably from 6,000 to 20,000. These oxyalkylene polymers may be used either individually or in combination of two or more thereof.

Of the above-described oxyalkylene polymer having a reactive silicon group, those having a number average molecular weight of 6,000 or more and a weight average molecular weight (Mw) to number average molecular weight (Mn) ratio of 1.6 or less have a lower viscosity than those having a higher Mw/Mn ratio. Accordingly, such polymers may be coated by spraying. Spray coating is an advantageous coating technique for its easiness and speediness. That is, the oxyalkylene polymers having an Mn of 6,000 or more and an Mw/Mn ratio of 1.6 or less provide a coating composition which can be coated by spraying and is therefore applicable to not only vehicles but also other substrates.

The oxyalkylene polymer having a reactive silicon group according to the present invention may be prepared by, for example, an addition reaction between a hydrosilane compound represented by formula (III):

$$H-[Si(R^2_{2-b})(X_b)-O-]_m-Si(R^2_{3-a})X_a \qquad (III)$$

wherein X, $R^2$, a, b, and m are as defined above,
and an unsaturated group-containing oxyalkylene polymer represented by formula (IV):

$$CH_2=C(R^3)-R^4-(O)_c- \qquad (IV)$$

wherein $R^3$ represents a hydrogen atom or a monovalent organic group having from 1 to 20 carbon atoms; $R^4$ represents a divalent organic group having from 1 to 20 carbon atoms; and c is 0 or 1,
in the presence of a VIII group transition metal catalyst in the Periodic Table, such as a platinum compound.

The oxyalkylene group having a reactive silicon group may also be prepared by the following processes (i) to (iii).

(i) A process comprising reacting a hydroxyl-terminated oxyalkylene polymer with a polyisocyanate compound, e. g., tolylene diisocyanate, to obtain an isocyanate-terminated oxyalkylene polymer and reacting the resulting polymer with a silicon compound represented by formula (V):

$$W-R^4-Si(R^2_{3-n})X_n \qquad (V)$$

wherein n, $R^2$, $R^4$, and X are as defined above; and W represents an active hydrogen-containing group selected from a hydroxyl group, a carboxyl group, a mercapto group, and a primary or secondary amino group, to cause a reaction between the isocyanate group of the former and the active hydrogen-containing group W of the latter.

(ii) A process comprising reacting an unsaturated group-containing oxyalkylene polymer represented by formula (IV) and a silicon compound represented by formula (V) wherein W is a mercapto group to cause an addition reaction between the unsaturated group of the former and the mercapto group of the latter.

(iii) A process comprising reacting the hydroxyl group of a hydroxyl-terminated oxyalkylene polymer with a silicon compound represented by formula (VI):

$$OCN\text{-}R^4\text{-}Si(R^2_{3-n})X_n \qquad (VI)$$

wherein $R^2$, $R^4$, X, and n are as defined above.

The above-mentioned processes are illustrative examples, and the process for preparing the reactive silicon group-containing oxyalkylene polymer of the present invention is not limited thereto.

In the process comprising reacting a hydrosilane compound of formula (III) and the unsaturated group-containing oxyalkylene polymer of formula (IV), a part or all of the X groups of the resulting polymer may be converted to a different hydrolyzable group or a hydroxyl group. For example, a halogen atom or a hydrogen atom as X of the resulting polymer may be converted, for preference, to an alkoxy group, an acyloxy group, an aminooxy group, an alkenyloxy group, a hydroxyl group, etc.

In formula (IV), $R^3$ preferably represents a hydrogen atom or a hydrocarbon group, and more preferably a hydrogen atom. $R^4$ preferably represents $-R^5$-, $-R^5OR^5$-, $-R^5OCO$-, $-R^5NHCO$-, or $-R^5CO$-, wherein $R^5$ represents a hydrocarbon group having from 1 to 10 carbon atoms, and more preferably a methylene group.

The unsaturated group-containing oxyalkylene polymer represented by formula (IV) may be prepared by, for example, the process disclosed in JP-A-54-6097 or a process comprising polymerizing an epoxy compound, e.g., ethylene oxide or propylene oxide, in the presence of an unsaturated group-containing epoxy compound, e.g., allyl glycidyl ether, to introduce the unsaturated group into the side chain of the polymer.

For the purpose of improving performance properties of a cured coating film, such as weather resistance, the coating composition for vehicles according to the present invention may further contain a copolymer having a reactive silicon group and comprising (1) an alkyl (meth)acrylate monomer unit having from 1 to 8 carbon atoms in the alkyl moiety thereof and (2) an alkyl (meth)acrylate monomer unit having 10 or more carbon atoms in the alkyl moiety thereof (hereinafter referred to as acrylic copolymer).

The alkyl (meth)acrylate monomer unit (1) having from 1 to 8 carbon atoms in the alkyl moiety thereof is represented by formula (VII):

$$-[CH_2\text{-}C(R^7)(COOR^6)\text{-}]- \qquad (VII)$$

wherein $R^6$ represents an alkyl group having from 1 to 8 carbon atoms; and $R^7$ represents a hydrogen atom or a methyl group.

The alkyl (meth)acrylate monomer unit (2) having 10 or more carbon atoms in the alkyl moiety thereof is represented by formula (VIII):

$$-[CH_2\text{-}C(R^7)(COOR^8)\text{-}]- \qquad (VIII)$$

wherein $R^7$ is as defined above; and $R^8$ represents an alkyl group having 10 or more carbon atoms.

In formula (VII), the alkyl group represented by $R^6$ contains from 1 to 8, preferably 1 to 4, and more preferably from 1 to 2, carbon atoms and includes methyl, ethyl, propyl, t-butyl, and 2-ethylhexyl groups. In the (meth)acrylic ester monomer unit (1), the alkyl group $R^6$ may be a single alkyl group or a mixed alkyl group.

In formula (VIII), the alkyl group represented by $R^8$ contains 10 or more, usually from 10 to 30, and preferably from 10 to 20, carbon atoms and includes a lauryl group, a tridecyl group, a cetyl group, a stearyl group, and an alkyl group having 22 carbon atoms (e.g., a behenyl group). Containing monomer unit (2) having such a long-chain alkyl group, the acrylic copolymer is considered compatible with the reactive silicon group-containing oxyalkylene polymer of the present invention. Similarly to $R^6$ of monomer unit (1), the alkyl group $R^8$ of monomer unit (2) may be a single alkyl group or a mixed alkyl group, for example, a mixture of a $C_{12}$ alkyl group and a $C_{13}$ alkyl group.

The molecular chain of the acrylic copolymer substantially comprises monomer units (1) and (2). The terminology "substantially comprising monomer units (1) and (2)" as used herein means that the acrylic copolymer contains these monomer units in a total proportion of at least 50% by weight, and preferably at least 70% by weight. If the total proportion of monomer units (1) and (2) is less than 50% by weight, the compatibility of the acrylic copolymer to the reactive silicon group-containing oxyalkylene polymer is reduced, and the resulting coating composition tends to become white turbid and to have reduce adhesive characteristics.

A ratio of monomer unit (1) to monomer unit (2) preferably ranges from 95/5 to 40/60 by weight, and more preferably from 90/10 to 60/40 by weight. If the (1)/(2) ratio is greater than 95/5, the compatibility is reduced. A ratio less than 40/60 is economically disadvantageous.

If desired, the acrylic copolymer may further comprise other monomer units derived from copolymerizable monomers. Examples of copolymerizable monomers include carboxyl-containing monomers, such as acrylic acid and methacrylic acid; amide-containing monomers, such as acrylamide, methacrylamide, N-methylolacrylamide, and N-methylolmethacrylamide; epoxy-containing monomers, such as glycidyl acrylate and glycidyl methacrylate; amino-containing monomers, such as diethylaminoethyl acrylate, diethylaminoethylmethacrylate, and aminoethyl vinyl ether; acrylonitrile, styrene, $\alpha$-methylstyrene, alkyl vinyl ethers, vinyl chloride, vinyl acetate, vinyl propionate, and ethylene.

The acrylic copolymer preferably has a number average molecular weight (Mn) of from 500 to 100,000, and more preferably from 1,000 to 3,000, from the standpoint of easy handling.

The average number of the reactive silicon groups per molecule of the acrylic copolymer is usually from 0.1 to 5.0, preferably from 0.5 to 2.5, and more preferably from 0.5 to 1.5.

The acrylic copolymer may be obtained by vinyl polymerization of at least the monomers providing units of formulae (VII) and (VIII) according to general solution polymerization or bulk polymerization or the like technique. The reaction is usually carried out at a temperature of from 50° to 150°C in the presence of a radical initiator, a chain transfer agent, a solvent, etc.

Suitable radical initiators include azobisisobutyronitrile and benzoyl peroxide. Suitable chain transfer agents include n-dodecylmercaptan and t-dodecylmercaptan. Solvents preferably include inert solvents, such as ethers, hydrocarbons, and acetic esters.

Introduction of a reactive silicon group into the acrylic copolymer can be effected through various processes, for example, (i) a process comprising copolymerizing monomers providing units of formulae (VII) and (VIII) and a compound having a polymerizable unsaturated bond and a reactive silicon group (e.g., $CH_2=CHSi(OCH_3)_3$) or (ii) a process comprising copolymerizing monomers providing units of formulae (VII) and (VIII) and a compound having a polymerizable unsaturated bond and a reactive functional group (hereinafter referred to as Y group) (e.g., acrylic acid) and reacting the resulting copolymer with a compound having a reactive silicon group and a functional group reactive to Y (e.g., a compound having $-Si(OCH_3)_3$ and an isocyanate group).

The compound having a polymerizable unsaturated group and a reactive functional group includes compounds represented by formula (IX):

$$R^9\text{-}[Si(R^2_{2\text{-}b})(X_b)\text{-}O\text{-}]_m\text{-}Si(R^2_{3\text{-}a})X_a \qquad (IX)$$

wherein $R^2$, X, a, b, and m are as defined above; and $R^9$ represents an organic residue having a polymerizable unsaturated bond.

Of the compounds represented by formula (IX), preferred are those represented by formula (X):

$$CH_2=C(R^7)QSi(CH_3)_{3\text{-}n}X_n \qquad (X)$$

wherein $R^7$, X, and n are as defined above; and Q represents a mere bond or a divalent organic group, such as $-COOR^{10}\text{-}$ (wherein $R^{10}$ represents an alkylene group having from 1 to 6 carbon atoms, e.g., $-CH_2-$ or $-CH_2CH_2-$), $-CH_2C_6H_5CH_2CH_2-$, or $-CH_2OCOC_6H_4COO(CH_2)_3-$.

Specific examples of the compounds represented by formula (IX) or (X) are shown below.

$$CH_2=CHSi(CH_3)(OCH_3)_2,$$

$$CH_2=CHSi(CH_3)C\ell_2,$$

$$CH_2{=}CHSi(OCH_3)_3,$$

$$CH_2{=}CHSiC\ell_3,$$

$$CH_2{=}CHCOO(CH_2)_2Si(CH_3)(OCH_3)_2,$$

$$CH_2{=}CHCOO(CH_2)_2Si(OCH_3)_3,$$

$$CH_2{=}CHCOO(CH_2)_2Si(CH_3)C\ell_2,$$

$$CH_2{=}CHCOO(CH_2)_2SiC\ell_3,$$

$$CH_2{=}C(CH_3)COO(CH_2)_2Si(CH_3)(OCH_3)_2,$$

$$CH_2{=}C(CH_3)COO(CH_2)_2Si(OCH_3)_3,$$

$$CH_2{=}C(CH_3)COO(CH_2)_3Si(CH_3)(OCH_3)_2,$$

$$CH_2{=}C(CH_3)COO(CH_2)_3Si(OCH_3)_3,$$

$$CH_2{=}C(CH_3)COO(CH_2)_2Si(CH_3)C\ell_2,$$

$$CH_2{=}C(CH_3)COO(CH_2)_2SiC\ell_3,$$

$$CH_2{=}CHCH_2OC(O)\text{-Ph-}COO(CH_2)_3Si(CH_3)(OCH_3)_2,$$

$$CH_2{=}CHCH_2OC(O)\text{-Ph-}COO(CH_2)_3Si(OCH_3)_3,$$

$$CH_2{=}CHCH_2OC(O)\text{-Ph-}COO(CH_2)_3Si(CH_3)C\ell_2,$$

$$CH_2{=}CHCH_2OC(O)\text{-Ph-}COO(CH_2)_3SiC\ell_3,$$

wherein Ph represents a phenyl group.

The acrylic copolymer may be used in an amount of from 5 to 5,000 parts by weight, and preferably from 5 to 2,000 parts by weight, per 100 parts by weight of the oxyalkylene polymer having a reactive silicon group.

If desired, the coating composition for vehicles to be used according to the present invention may further contain additives, such as curing catalysts, plasticizers, fillers, and so on.

The curing catalysts include, while not limiting, generally employed catalysts for silanol condensation. Examples of suitable curing catalysts include organotin compounds, organotitanium compounds, organoaluminum compounds, organozirconium compounds, amine compounds, acid phosphoric esters, reaction products of an acid phosphoric ester and an amine compound, saturated or unsaturated polycarboxylic acids or anhydrides thereof, salts of a carboxylic acid compound and an amine compound, and lead octylate.

Specific examples of the organotin compounds are carboxylic acid salts, e.g., dibutyltin diacetate, dibutyltin dilaurate, dibutyltin maleate, dioctyltin maleate, dibutyltin phthalate, tin octylate, and tin naphthenate; chelate compounds, e.g., diacetylacetonatodibutyltin; dibutyltin methoxide; and a reaction product of dibutyltin oxide and a phthalic ester.

Specific examples of the organotitanium compounds are titanic esters, e.g., tetrabutyl titanate, tetraisopropyl titanate, tetrapropyl titanate, and triethanolamine titanate; and chelate compounds, e.g., tetraacetylacetonatotitanium.

Specific examples of the organoaluminum compounds are trisacetylacetonatoaluminum, tris(ethylacetoacetato)aluminum, and diisopropoxyethylacetoacetatoaluminum.

Specific examples of the organozirconium compounds are alkoxides; e.g., zirconium tetraisopropoxide and zirconium tetrabutoxide; and chelate compounds, e.g., tetraacetylacetonatozirconium.

Specific examples of the amine compounds are butylamine, monoethanolamine, triethylenetriamine, guanidine, 2-ethyl-4-methylimidazole, and 1,8-diazabicyclo[5.4.0]undecene-7 (DBU).

The acid phosphoric esters are phosphoric esters having a moiety of -O-P(=O)(OH)- and include, for example, organic acid phosphoric esters represented by formula $(RO)_d$-P(=O)-$(OH)_{3-d}$, wherein R represents an organic residue; and d represents 1 or 2. Specific examples of such organic acid phosphoric esters are shown below.

$(CH_3O)_2P(O)OH$, $(CH_3O)P(O)(OH)_2$, $(C_2H_5O)_2P(O)OH$, $(C_2H_5O)P(O)(OH)_2$, $[(CH_3)_2CHO]_2P(O)OH$, $(CH_3)_2CHOP(O)(OH)_2$, $(C_4H_9O)_2P(O)OH$, $(C_4H_9O)P(O)(OH)_2$, $(C_8H_{17}O)_2P(O)OH$, $(C_8H_{17}O)P(O)(OH)_2$, $(C_{10}H_{21}O)_2P(O)OH$, $(C_{10}H_{21}O)P(O)(OH)_2$, $(C_{13}H_{27}O)_2P(O)OH$, $(C_{13}H_{27}O)P(O)(OH)_2$, $(HOC_8H_{16}O)_2P(O)OH$, $(HOC_8H_{16}O)P(O)(OH)_2$, $(HOC_6H_{12}O)P(O)(OH)_2$, $[(CH_2OH)(CHOH)O]_2P(O)OH$, $[(CH_2OH)(CHOH)O]P(O)(OH)_2$ $[(CH_2OH)(CHOH)C_2H_4O]_2P(O)OH$, $[(CH_2OH)(CHOH)C_2H_4O]P(O)(OH)_2$.

The curing catalyst is usually used in an amount up to about 20 parts by weight per 100 parts by weight of the total amount of the oxyalkylene polymer having a reactive silicon group and the acrylic copolymer, if used.

Examples of suitable plasticizers include phthalic esters, such as dibutyl phthalate, diheptyl phthalate, di(2-ethylhexyl) phthalate, butylbenzyl phthalate, and butylphthalylbutyl glycolate; non-aromatic dibasic acid esters, such as dioctyl adipate and dioctyl sebacate; and phosphoric esters, such as tricresyl phosphate and tributyl phosphate. In addition, plasticizers having a relatively high molecular weight, such as polyester type plasticizers, e.g., polyesters of a dibasic acid and a dihydric alcohol; polyethers, e.g., polypropylene glycol or derivatives thereof; and styrene polymers, e.g., poly-$\alpha$-methylstyrene and polystyrene, can also be used. These plasticizers may be used either individually or in combination thereof. The plasticizer is usually added in an amount of from about 20 to 200 parts by weight per 100 parts by weight of the total amount of the oxyalkylene polymer having a reactive silicon group and the acrylic copolymer, if used.

Specific examples of suitable fillers include inorganic fillers, such as calcium carbonate, talc, diatomaceous earth, mica, kaoline, magnesium carbonate, vermiculite, titanium oxide, graphite, alumina, silica, glass balloons, silas balloons (calcined volcanic ash), silica balloons, calcium oxide, magnesium oxide, and silicon oxide; and organic fillers, such as powdered rubbers, reclaimed rubbers, fine powders of thermosetting or thermoplastic resins, e.g. polyvinylchloride and hollow polyethylene beads. Specific metal oxides, such as calcium oxide and magnesium oxide are added due to depressing cell-formation in the compound when it is cured. These fillers are usually added in an amount of from about 3 to 300 parts by weight per 100 parts by weight of the total amount of the oxyalkylene polymer having a reactive silicon group and the acrylic copolymer, if used.

Other additives which may be added to the coating composition to be used according to the present invention include anti-sag agents, such as hydrogenated castor oil, organic bentonite, and calcium stearate; colorants, antioxidants, adhesion-imparting agents, and solvents.

The coating composition for use according to the present invention is particularly useful as an undercoating compound or a sealer for vehicle bodies for anticorrosion and vibration damping and well meets the demands of the automotive industry.

The present invention is now illustrated in greater detail with reference to Synthesis Examples and Examples, but it should be understood that the present invention is not deemed to be limited thereto. All the percents are by weight unless otherwise indicated.

## SYNTHESIS EXAMPLE 1

### Synthesis of Reactive Silicon Group-Containing Oxyalkylene Polymer:

In a pressure reactor equipped with a stirrer was put 800 g of polyoxypropylene having a number average molecular weight of 8,000 and having introduced an allyl ether group into 97% of the total terminals tereof, and 19 g of methyldimethoxysilane was added thereto. In the reactor was further charged 0.34 m$\ell$ of a chloroplatinic acid catalyst solution (8.9 g of $H_2PtC\ell_6 \cdot 6H_2O$ dissolved in 18 m$\ell$ of isopropyl alcohol and 160 m$\ell$ of tetrahydrofuran), and the mixture was made to react at 80°C for 6 hours.

The IR spectrum of the reaction mixture revealed that substantially no silane group remained. Further, as a result of the NMR analysis for determination of the silicon atom content, the resulting polyoxypropylene was found to have about 1.7 groups of $(CH_3O)_2(CH_3)SiCH_2CH_2CH_2O-$ per molecule at the molecular terminal thereof.

EXAMPLES 1 TO 3 AND COMPARATIVE EXAMPLES 1 TO 3

To 100 g of the reactive silicon group-containing oxyalkylene polymer having a number average molecular weight of 8,000 obtained in Synthesis Example 1 were added 100 g of ground calcium carbonate, 50 g of colloidal calcium carbonate, 5 g of glass balloons (average particle size: 70 μm), 100 g of diisononyl phthalate, 5 g of anhydrous silica, 2 g of a hindered phenol type antioxidant, 10 g of calcium oxide, 2 g of an aluminum chelate type curing catalyst, and 1 g of an aminosilane compound, and the mixture was thoroughly kneaded in a planetary mixer to prepare a coating composition.

For comparison, 100 g of a vinyl chloride resin was thoroughly mixed with 100 g of ground calcium carbonate, 50 g of colloidal calcium carbonate, 5 g of glass balloons (average particle size: 70 μm), 100 g of diisononyl phthalate, 3 g of a lead type dehydrochlorination inhibitor, and 5 g of a urethane prepolymer in a planetary mixer to prepare a comparative coating composition.

Each of the resulting coating compositions was coated on a cation electrodeposited steel plate to a thickness shown in Table 1 below and cured under conditions shown in Table 1 to prepare specimens. The cured coating film was evaluated according to the following test methods. The test results are shown in Table 1.

1) Resistance to Chipping:

Three kinds of nuts "M-4" were dropped on the specimen placed at an angle of inclination of 45° from the drop height of 2 m. The total weight of the nuts which were dropped to bare the metal substrate of its coating was obtained.

2) Resistance to Salt Spray:

The coating film on the central area of the specimen was crosshatched to a depth reaching the metal substrate and kept in a salt spray testing chamber for 200 hours. Thereafter, cellophane tape was adhered and stripped off. The maximum peel width was measured.

3) Vibration-damping Properties:

The vibration damping test method of undercoating materials for automobiles according to JAS 07006 was followed. A coefficient of vibration damping (d) was obtained from equation:

$$d = (f_2 - f_1)/f_0$$

wherein $f_0$ is a resonant frequency at a secondary resonant point measured at 25°C, and $f_1$ and $f_2$ are frequencies at points lower than $f_0$ by 3 dB.

TABLE 1

| | Example No. | | | Compara. Example No. | | |
|---|---|---|---|---|---|---|
| | 1 | 2 | 3 | 1 | 2 | 3 |
| Curing Conditions: | | | | | | |
| Temp. (°C) | 140 | 140 | 120 | 140 | 140 | 120 |
| Time (min) | 30 | 30 | 20 | 30 | 30 | 20 |
| Film Thickness (mm) | 1.5 | 0.5 | 0.5 | 1.5 | 0.5 | 0.5 |
| Resistance to Chipping (kg) | 73 | 43 | 41 | 69 | 40 | 8 |

TABLE 1 (continued)

|  | Example No. | | | Compara. Example No. | | |
|---|---|---|---|---|---|---|
|  | 1 | 2 | 3 | 1 | 2 | 3 |
| Curing Conditions: | | | | | | |
| Vibration Damping | 0.012 | 0.008 | 0.009 | 0.007 | 0.004 | 0.004 |
| Resistance to Salt Spray (mm) | ≤1 | ≤1 | 1.2 | ≤1 | 1.7 | 3.5 |

As can be seen from Table 1, the coating composition according to the present invention exhibits excellent resistance to chipping, vibration damping, and salt spray resistance even when coated to a small thickness or cured under low temperature and short time conditions.

SYNTHESIS EXAMPLE 2

Synthesis of Acrylic Copolymer

To 20 g of xylene heated to 110°C was added dropwise a solution consisting of 5.7 g of butyl acrylate, 65.1 g of methyl methacrylate, 13.3 g of stearyl methacrylate, 5.6 g of γ-methacryloxypropyltrimethoxysilane, 8.0 g of γ-mercaptopropyltrimethoxysilane, 5.0 g of azobisisobutyronitrile, and 22 g of xylene over a period of 6 hours. After the addition, the mixture was further allowed to react for 2 hours to obtain an acrylic copolymer having a solid content of 70% and a number average molecular weight (Mn) of 2,100 as measured by gel-permeation chromatography (GPC) based on polystyrene gel.

EXAMPLES 4 TO 6

The oxyalkylene polymer having a reactive silicon group obtained in Synthesis Example 1 and the acrylic copolymer obtained in Synthesis Example 2 were blended at a solid weight ratio of 60/40. The blend was deaerated at 110°C under reduced pressure by means of an evaporator to obtain a clear and viscous liquid having a solid content of 99% or more.

To 100 g of the deaerated polymer blend were added 100 g of ground calcium carbonate, 50 g of colloidal calcium carbonate, 5 g of glass balloons (average particle size: 70 μm), 100 g of diisononyl phthalate, 5 g of anhydrous silica, 2 g of a hindered phenol type antioxidant, 10 g of calcium oxide, 2 g of an aluminum chelate type curing catalyst, 1 g of an aminosilane compound, and 5 g of a silicone type reactive diluent ("AFP-1" produced by Shin-Etsu Silicone Co., Ltd.). The mixture was thoroughly kneaded in a planetary mixer to prepare a coating composition.

The resulting coating composition was coated on a cation electrodeposited steel plate to a thickness shown in Table 2 below and cured under conditions shown in Table 2 to prepare specimens. The cured coating film was evaluated in the same manner as in Examples 1 to 3. The results obtained are shown in Table 2.

TABLE 2

|  | Example 4 | Example 5 | Example 6 |
|---|---|---|---|
| Curing Conditions: | | | |
| Temp. (°C) | 140 | 140 | 120 |
| Time (min) | 30 | 30 | 20 |
| Film Thickness (mm) | 1.5 | 0.5 | 0.5 |
| Resistance to Chipping (kg) | 103 | 79 | 73 |
| Vibration Damping | 0.045 | 0.010 | 0.012 |
| Resistance to Salt Spray (mm) | ≤1 | ≤1 | 1.2 |

It can be seen from Table 2 in view of Table 1 that a combined use of the acrylic copolymer brings about further improvements in resistance to chipping and vibration damping.

SYNTHESIS EXAMPLE 3

Synthesis of Reactive Silicon Group-Containing Oxyalkylene Polymer Having Narrow Molecular Weight Distribution:

In a 1.5 $\ell$ glass-made pressure reactor was charged 401 g (0.122 equivalent) of polyoxypropylene triol having a number average molecular weight (Mn) of 10,000 (Mw/Mn = 1.2; viscosity: 28 poise), and the atmosphere was displaced with nitrogen.

To the polymer was added dropwise 28.7 g (0.149 equivalent) of a 28% methanol solution of sodium methoxide at 137°C from a dropping funnel, and the mixture was allowed to react for 5 hours, followed by deaeration under reduced pressure. After the atmosphere was displaced with nitrogen, 13.5 g (0.177 equivalent) of allyl chloride was added thereto dropwise, and the mixture was made to react for 1.5 hours. The allylation reaction was further continued by additionally using 8.4 g (0.0435 equivalent) of a 28% methanol solution of sodium methoxide and 4.1 g (0.0525 equivalent) of allyl chloride.

The reaction mixture was dissolved in hexane. The solution was treated by adsorption onto aluminum silicate, and hexane was removed under reduced pressure to obtain 311 g of a clear yellow polymer (viscosity: 24 poise).

The resulting polymer (270 g; 0.0975 equivalent) was put in a glass-made pressure reactor, and the atmosphere was displaced with nitrogen. To the polymer was added 0.075 m$\ell$ of a chloroplatinic acid catalyst solution (25 g of $H_2PtC\ell_6 \cdot 6H_2O$ dissolved in 500 g of isopropyl alcohol), followed by stirring for 30 minutes. Then, 8.67 g (0.0820 equivalent) of dimethoxymethylsilane was added dropwise thereto from a dropping funnel, and the mixture was allowed to react at 90°C for 4 hours. Deaeration of the reaction mixture gave 260 g of a clear yellow polymer.

SYNTHESIS EXAMPLE 4

Synthesis of Reactive Silicon Group-Containing Oxyalkylene Polymer Having Narrow Molecular Weight Distribution:

In a flask equipped with a stirrer were charged 220 g (0.0667 equivalent) of polyoxypropylene triol having an Mn of 10,000 (Mw/Mn = 1.2, viscosity: 28 poise) and 0.02 g of dibutyltin dilaurate, and 12.6 g (0.0667 equivalent) of γ-isocyanatepropylmethyldimethoxysilane was added thereto dropwise at room temperature in a nitrogen atmosphere. After the addition, the mixture was allowed to react at 75°C for 1.5 hours. The reaction was ceased after confirming disappearance of an NCO absorption at around 2280 cm$^{-1}$ and appearance of a C=O absorption at around 1730 cm$^{-1}$ in the IR spectrum. There was obtained 213 g of a clear colorless polymer.

SYNTHESIS EXAMPLE 5

Synthesis of Reactive Silicon Group-Containing Oxyalkylene Polymer Having Broad Molecular Weight Distribution:

In a glass-made pressure reactor whose atmosphere had been displaced with nitrogen were charged 420 g of polyoxypropylene glycol having a number average molecular weight (Mn) of 3,000 and 80 g of polyoxypropylene triol having an Mn of 3,000. To the polymer blend was added 40 g of sodium hydroxide, and the mixture was allowed to react at 60°C for 13 hours. Then, 12.7 g of bromochloromethane was added thereto, followed by reacting at 60°C for 10 hours. The polymer as produced had an Mw/Mn ratio of 2.0 and a viscosity of 222 poise.

Subsequently, 15 g of allyl chloride was added to the reaction mixture, followed by reacting for 36 hours. After completion of the reaction, the volatile content was removed from the reaction mixture under reduced pressure. The residue was put in a beaker and dissolved in hexane. The solution was subjected to adsorption treatment onto aluminum silicate, and hexane was removed under reduced pressure.

The resulting polymer (500 g) was charged in a reactor purged with nitrogen, and 0.03 g of a chloroplatinic acid catalyst solution (25 g of $H_2PtC\ell_6 \cdot 6H_2O$ dissolved in 500 g of isopropyl alcohol). Then, 18 g of dimethoxymethylsilane was added thereto, and the mixture was allowed to react at 80°C for 4 hours. After completion of the reaction, the volatile content was removed under reduced pressure to obtain 550 g of a clear pale yellow polymer.

SYNTHESIS EXAMPLE 6

Synthesis of Reactive Silicon Group-Containing Oxyalkylene Polymer Having Low Molecular Weight:

In a glass-made pressure reactor purged with nitrogen was charged 540 g of polyoxypropylene glycol having an Mn of 3,000. To the polymer was added 40 g of sodium hydroxide, and the mixture was reacted at 60°C for 13 hours. Then, 15 g of allyl chloride was added thereto, followed by further reacting for 36 hours. After completion of the reaction, the volatile content was removed from the reaction mixture under reduced pressure. The residue was put in a beaker and dissolved in hexane. The solution was subjected to adsorption treatment onto aluminum silicate, and hexane was removed under reduced pressure.

The resulting polymer (500 g) was charged in a reactor purged with nitrogen, and 0.03 g of a chloroplatinic acid catalyst solution (25 g of $H_2PtC\ell_6 \cdot 6H_2O$ dissolved in 500 g of isopropyl alcohol) as added thereto. Then, 12 g of dimethoxymethylsilane was added thereto, and the mixture was made to react at 80°C for 4 hours. After completion of the reaction, the volatile content was removed under reduced pressure to obtain 540 g of a clear pale yellow polymer.

The viscosity of the polymers obtained in Synthesis Examples 3 to 6 was measured at 23°C with a Brookfield viscometer (BM type rotor No. 4; 12 rpm). Further, the Mn and Mw/Mn ratio of each polymer were determined by GPC on polystyrene gel (product of Toso K.K.) (solvent: tetrahydrofuran; oven temperature: 40°C). The results of these measurements are shown in Table 3 below.

TABLE 3

| Polymer | Viscosity (poise) | Number average molecular weight (Mn) | Molecualr weight distribution (Mw/Mn) |
|---|---|---|---|
| Synthesis Example 3 | 30 | $1.3 \times 10^4$ | 1.2 |
| Synthesis Example 4 | 48 | $1.3 \times 10^4$ | 1.2 |
| Synthesis Example 5 | 230 | $1.2 \times 10^4$ | 2.1 |
| Synthesis Example 6 | 7 | $0.46 \times 10^4$ | 1.2 |

EXAMPLES 7 TO 10

To 100 g of each of the reactive silicon group-containing oxyalkylene polymers obtained in Synthesis Examples 3 to 6 were added 100 g of calcium carbonate, 100 g of dioctyl phthalate, and 2 g of an aluminum chelate type curing catalyst, and the mixture was thoroughly kneaded in a planetary mixer to prepare a coating composition.

The resulting coating composition was spray coated on a cation electrodeposited steel plate (15 cm x 15 cm) by means of an airless spraying apparatus (manufactured by Asahi Ohkuma K.K.) under a spray pressure of 100 kg/$cm^2$ to a thickness of 1 mm. The wet coating was cured on heating at 120°C for 30 minutes. The coating properties of the composition were evaluated as follows. Further, chipping resistance of the cured film was evaluated in the same manner as in Example 1. The results obtained are shown in Table 4 below.

1) Spray Coating Properties:

Spray coating properties of the composition were evaluated in terms of the rate of spraying (g/min) under the above-described spray conditions.

2) Anti-Sagging:

The steel plate immediately after being coated was inclined at 45°, and sagging of the wet coating after 1 minute was observed and rated as follows.

A  No-sag
B  Slight sags
C  Obvious sags
D  Runs

TABLE 4

| Example No. | Rate of Spraying (g/min) | Anti-Sag | Chipping Resistance (kg) |
|---|---|---|---|
| Example 7 | 1380 | A - B | 56 |

TABLE 4   (continued)

| Example No. | Rate of Spraying (g/min) | Anti-Sag | Chipping Resistance (kg) |
|---|---|---|---|
| Example 8 | 1150 | A - B | 54 |
| Example 9 | 580 | A | 42 |
| Example 10 | 1630 | B - C | 25 |

It is seen from Tables 3 and 4 that polyoxyalkylene polymer having a large molecular weight and a narrow molecular weight distribution provides a coating composition excellent in spray coating properties and anti-sag.

## Claims

1. The use of coating composition comprising an oxyalkylene polymer having a silicon-containing group which has a hydroxyl group or a hydrolyzable group bonded to the silicon atom and is capable of crosslinking on forming a siloxane bond as an undercoat for vehicles.

2. The use of coating composition as claimed in Claim 1, wherein said oxyalkylene polymer has a polymer skeleton comprising a repeating unit represented by formula: $-R^1-O-$, wherein $R^1$ represents an alkylene group.

3. The use of coating composition as claimed in Claim 1 or 2, wherein said silicon-containing group is a group represented by formula:

$$[Si(R^2_{2-b})(X_b)-O-]_m-Si(R^2_{3-a})X_a$$

wherein X or X's, which may be the same or different, each represent a hydroxyl group or a hydrolyzable group; $R^2$ or $R^2$'s, which may be the same or different, each represent a monovalent hydrocarbon group having from 1 to 20 carbon atoms or a triorganosiloxy group $(R'_3)SiO-$, wherein three R' groups, which may be the same or different, each represent a monovalent hydrocarbon group having from 1 to 20 carbon atoms; a is 0, 1, 2, or 3, and b is 0, 1 or 2, provided that $1 \leq a + mb$; and m is 0 or an integer of from 1 to 19; b's in $-[Si(R^2_{2-b})(X_b)-O-]_m-$ do not need to be the same.

4. The use of coating composition as claimed in Claim 1 or 2, wherein said silicon-containing group is a group represented by formula:

$$-Si(R^2_{3-n})X_n$$

wherein $R^2$ or $R^2$'s, which may be the same or different, each represent a monovalent hydrocarbon group having from 1 to 20 carbon atoms or a tri-organosiloxy group $(R'_3)SiO-$, wherein three R' groups, which may be the same or different, each represent a monovalent hydrocarbon group having from 1 to 20 carbon atoms; and n is 1, 2, or 3.

5. The use of coating composition as claimed in any one of Claims 1 to 4, wherein said composition further comprises a copolymer having a silicon-containing group which has a hydroxyl group or a hydrolyzable group bonded to the silicon atom and is capable of crosslinking on forming a siloxane bond, the copolymer comprising (1) an alkyl (meth)acrylate monomer unit having from 1 to 8 carbon atoms in the alkyl moiety thereof and (2) an alkyl (meth) acrylate monomer unit having 10 or more carbon atoms in the alkyl moiety thereof.

6. The use of coating composition as claimed in any of claims 1 to 5 having a number average molecular weight of 6,000 or more and a weight-average molecular weight to number average molecular weight ratio of not more than 1.6, which is sprayable.

## Patentansprüche

1. Verwendung einer Beschichtungszusammensetzung, umfassend ein Oxyalkylenpolymer mit einem siliciumhaltigen Rest, der eine an das Siliciumatom gebundene Hydroxylgruppe oder hydrolysierbare Gruppe aufweist und unter Ausbildung einer Siloxanbindung vernetzen kann, als Unterbodenbeschichtung für Fahrzeuge.

2. Verwendung einer Beschichtungszusammensetzung gemäß Anspruch 1, wobei das Oxyalkylenpolymer ein Polymerskelett aufweist, das eine sich wiederholende Einheit der Formel: $-R^1-O-$ umfaßt, in der $R^1$ ein Alkylenrest ist.

3. Verwendung einer Beschichtungszusammensetzung gemäß Anspruch 1 oder 2, wobei der siliciumhaltige Rest ein Rest der Formel:

$$-[Si(R^2_{2-b})(X_b)-O-]_m-Si(R^2_{3-a})X_a$$

ist, in der der Rest X oder die Reste X, die gleich oder verschieden sein können, jeweils eine Hydroxylgruppe oder eine hydrolysierbare Gruppe bedeuten; der Rest $R^2$ oder die Reste $R^2$, die gleich oder verschieden sein können, jeweils einen einwertigen Kohlenwasserstoffrest mit 1 bis 20 Kohlenstoffatomen oder einen Triorganosiloxyrest $(R'_3)SiO-$ bedeuten, bei dem die drei Reste $R'$, die gleich oder verschieden sein können, jeweils einen einwertigen Kohlenwasserstoffrest mit 1 bis 20 Kohlenstoffatomen bedeuten; a 0, 1, 2 oder 3 und b 0, 1 oder 2 ist, mit der Maßgabe, daß $1 \leq a + mb$ ist und m 0 oder eine ganze Zahl von 1 bis 19 ist; und die Werte b in $-[Si(R^2_{2-b})(X_b)-O-]_m-$ nicht gleich sein müssen.

4. Verwendung einer Beschichtungszusammensetzung gemäß Anspruch 1 oder 2, wobei der siliciumhaltige Rest ein Rest der Formel:

$$-Si(R^2_{3-n})X_n$$

ist, in der der Rest $R^2$ oder die Reste $R^2$, die gleich oder verschieden sein können, jeweils einen einwertigen Kohlenwasserstoffrest mit 1 bis 20 Kohlenstoffatomen oder einen Triorganosiloxyrest $(R'_3)SiO-$ bedeuten, bei dem die drei Reste $R'$, die gleich oder verschieden sein können, jeweils einen einwertigen Kohlenwasserstoffrest mit 1 bis 20 Kohlenstoffatomen bedeuten; und n 1, 2 oder 3 ist.

5. Verwendung einer Beschichtungszusammensetzung gemäß einem der Ansprüche 1 bis 4, wobei die Zusammensetzung ferner ein Copolymer mit einem siliciumhaltigen Rest, der eine an das Siliciumatom gebundene Hydroxylgruppe oder eine hydrolysierbare Gruppe aufweist und unter Ausbildung einer Siloxanbindung vernetzen kann, umfaßt, wobei das Copolymer (1) eine Alkylmethacrylat-Monomereinheit mit 1 bis 8 Kohlenstoffatomen in ihrer Alkyleinheit und (2) eine Alkylmethacrylat-Monomereinheit mit 10 oder mehr Kohlenstoffatomen in ihrer Alkyleinheit umfaßt.

6. Verwendung einer Beschichtungszusammensetzung gemäß einem der Ansprüche 1 bis 5 mit einem Zahlenmittel des Molekulargewichtes von 6.000 oder mehr und einem Verhältnis von Gewichtsmittel des Molekulargewichtes zu Zahlenmittel des Molekulargewichtes von nicht größer als 1,6, die sprühbar ist.

## Revendications

1. Utilisation d'une composition de revêtement comportant un polymère d'oxyalkylène présentant un groupe contenant du silicium qui présente un groupe hydroxyle ou un groupe hydrolysable lié à l'atome de silicium, et est capable de réticuler en formant une liaison siloxane, comme couche de fond pour véhicule.

2. Utilisation de la composition de revêtement selon la revendication 1, dans laquelle ledit polymère d'oxyalkylène présente un squelette polymère comportant un motif représenté par la formule $-R^1-O-$, dans laquelle $R^1$ représente un groupe alkylène.

3. Utilisation de la composition de revêtement selon la revendication 1 ou 2, dans laquelle ledit groupe contenant du silicium est un groupe représenté par la formule:

$$-[Si(R^2_{2-b})(X_b)-O-]_m-Si(R^2_{3-a})X_a$$

dans laquelle le ou les X, qui peuvent être identiques ou différents, représentent chacun un groupe hydroxyle ou un groupe hydrolysable; le ou les $R^2$, qui peuvent être identiques ou différents, représentent chacun un groupe hydrocarburé monovalent comptant de 1 à 20 atomes de carbone ou un groupe triorganosiloxy $(R'_3)SiO-$, dans lequel trois groupes R' qui peuvent être identiques ou différents représentent chacun un groupe hydrocarburé monovalent comptant de 1 à 20 atomes de carbone; a représente 0, 1, 2 ou 3 et b représente 0, 1 ou 2, avec la condition que $1 \le a + mb$; et m représente 0 ou un entier de 1 à 19; dans $-[Si(R^2_{2-b})(X_b)-O-]_m-$, les b ne doivent pas être identiques.

4.  Utilisation de la composition de revêtement selon la revendication 1 ou 2, dans laquelle ledit groupe contenant du silicium est un groupe représenté par la formule:

$$-Si(R^2_{3-n})X_n$$

dans laquelle le ou les $R^2$, qui peuvent être identiques ou différents, représentent chacun un groupe hydrocarburé monovalent comptant de 1 à 20 atomes de carbone ou un groupe triorganosiloxy $(R'_3)SiO-$, dans lequel trois groupes R', qui peuvent être identiques ou différents, représentent chacun un groupe hydrocarburé monovalent comptant de 1 à 20 atomes de carbone; et n représente 1, 2 ou 3.

5.  Utilisation de la composition de revêtement selon l'une quelconque des revendications 1 ou 4, dans laquelle ladite composition comporte en outre un copolymère présentant un groupe contenant du silicium qui présente un groupe hydroxyle ou un groupe hydrolysable lié à l'atome de silicium, et est capable de réticuler en formant une liaison siloxane, le copolymère comportant (1) une unité monomère de (méth)acrylate d'alkyle comptant de 1 à 8 atomes de carbone dans sa fraction alkyle et (2) une unité monomère de (méth)acrylate d'alkyle comptant 10 atomes de carbone ou plus dans sa fraction alkyle.

6.  Utilisation d'une composition de revêtement selon l'une quelconque des revendications 1 à 5, qui présente un poids moléculaire moyen en nombre de 6 000 ou plus et un rapport entre le poids moléculaire moyen en poids et le poids moléculaire moyen en nombre non supérieur à 1,6, laquelle composition est pulvérisable.